# EUROPEAN PATENT SPECIFICATION

(11) **EP 2 689 170 B1**
(45) Date of publication and mention of the grant of the patent: **04.11.2015**
(21) Application number: 12706976.3
(22) Date of filing: 17.02.2012
(51) Int. Cl.: F16K 31/126, F16K 41/12, G05D 16/06, G05D 16/10

(54) **VALVE APPARATUS TO PREVENT CONTAMINATION OF FLUID IN A FLUID REGULATOR**
VENTILVORRICHTUNG ZUR VERHINDERUNG DER VERUNREINIGUNG EINER FLÜSSIGKEIT IN EINEM FLÜSSIGKEITSREGLER
APPAREIL À SOUPAPE PERMETTANT D'EMPÊCHER LA CONTAMINATION D'UN FLUIDE DANS UN RÉGULATEUR DE FLUIDE

(30) Priority: 21.03.2011 US 201113052470
(43) Date of publication of application: 29.01.2014
(73) Proprietor: Tescom Corporation, Elk River, MN 55330 (US)
(72) Inventor: CLIFFORD, Jason, D., Brooklyn Park, MN 55443 (US); CRAMER, Mark, Wharton, Zimmerman, MN 55398 (US)
(74) Representative: Foot, Paul Matthew James
(86) International application number: PCT/US2012/025538
(87) International publication number: WO 2012/128870

(56) References cited:
- WO-A2-2011/002559
- US-A- 2 612 728
- US-A- 4 055 198
- US-A- 5 443 083
- US-A- 5 904 178

## Description

### FIELD OF THE DISCLOSURE

This patent relates generally to fluid regulators and, more particularly, to valve apparatus to prevent contamination of a fluid in a fluid regulator.

### BACKGROUND

Fluid regulators are commonly distributed throughout process control systems to control the pressures of various fluids (e.g., liquids, gasses, etc.). Fluid regulators are typically used to regulate the pressure of a fluid to a substantially constant value.

Specifically, a fluid regulator has an inlet that typically receives a supply fluid at a relatively high pressure and provides a relatively lower and substantially constant pressure at an outlet.

To regulate the downstream pressure, fluids regulators commonly include a sensing element or diaphragm to sense an outlet pressure in fluid communication with a downstream source. A valve apparatus is disposed within the fluid flow passageway to control or modulate fluid flow between an inlet and the outlet. The valve apparatus is operatively coupled to the sensing element, which causes the valve apparatus to move between an open position to allow fluid flow between the inlet and the outlet and a closed position to prevent or restrict fluid flow between the inlet and the outlet based on a pressure differential across the sensing element.
Examples of fluid regulators are disclosed in WO2011/002559; US5443083; US4055198; US5904178; and US2612728.

WO2011/002559 discloses a pressure reducing valve including a balanced valve cartridge. The balanced valve cartridge has a retainer including a central bore. A valve seat and a valve plug are disposed within the central bore and cooperate to open and close the valve. A cap closes one end of the central bore, the cap including a blind bore for receiving a portion of the valve plug. Downstream fluid pressure is transmitted into the blind bore through a hollow portion of the valve plug, thus balancing the valve plug within the retainer.

US5443083 discloses the valving element which is positively tied to a pressure-sensing and -responsive diaphragm, via a diaphragm-carried insert. The connection is so arranged as to permit relative angular displacement, between the valving element and the diaphragm, so that cocking of the element, in its axial movement, will not occur.

US4055198 discloses an excess pressure relieving means for use with fluid pressure reducing apparatus wherein fluid passes from a high pressure inlet chamber to a reduced pressure outlet chamber. The pressure relieving means includes a valve member having a relief port carried by a diaphragm which extends across the outlet chamber, a closure member carried by the diaphragm normally closing the fluid relief port, and an operator carried by the closure member engaging a stop which limits movement of the closure member but which permits further movement of the valve member producing a separation of the valve and closure members permitting excess fluid pressure to be dissipated through the relief port.

US5904178 discloses a gas flow regulator valve having a metering valve and filter assembly including a drawn, generally cup shaped, or hat shaped filter element having a substantially flat end panel, a generally cylindrical sidewall and an open end opposite the end panel. An integrally formed flange, or rim, is formed around the open end and projects outwardly therefrom to provide means for mounting the filter, in a fluid-tight relation, in the metering valve assembly body.

US2612728 discloses a fluid pressure regulator configured to insure alignment of the moveable and stationary parts of a valve such that the valve has less creep, less danger of leaking, and wear is distributed more uniformly.

To couple the valve apparatus in the fluid flow passageway, some known fluid regulators employ a retainer or other member that is threadably coupled to a bore of the fluid regulator body. However, during assembly, such a threaded connection may form impurities (e.g., particulate, debris or contaminate) downstream from a filter of the valve apparatus. In operation, a high pressure process fluid may cause impurities to flow in the fluid flow passageway and contaminate downstream components or equipment. For high-purity applications, a contaminated fluid may be unacceptable. Additionally or alternatively, impurities may settle on a sealing surface of the valve apparatus, which may cause an improper seal when the fluid regulator is in a closed position and/or cause damage to the valve apparatus.

### SUMMARY

In one example, a valve apparatus includes a housing disposed within a fluid flow passageway of the fluid regulator to define a low-pressure side of the fluid flow passageway and a high-pressure side of the fluid flow passageway. The housing has a bore that at least partially defines the fluid flow passageway when coupled to the fluid regulator. The housing has a movable valve assembly disposed within the bore via a non-threaded connection in fluid communication with the low-pressure side of the fluid flow passageway and external threads to threadably couple the housing to an opening of the fluid regulator. A seal system prevents impurities from flowing between the high-pressure side of the fluid flow passageway and the low-pressure side of the fluid flow passageway. The valve apparatus further includes a filter to trap impurities within an inlet chamber defined by the opening of the fluid regulator. The filter possesses a circumferential portion that surrounds a portion of the movable valve assembly and a closed end that retains the movable valve assembly within the bore. The filter forms an interference fit with the housing.

In another example, a fluid regulator includes a valve body having threaded opening that at least partially defines a fluid flow passageway between an inlet and an outlet. The fluid regulator includes a valve cartridge having a housing that includes external threads to removably couple the valve cartridge to the threaded opening of the valve body and the valve cartridge has a filter coupled to the housing. The housing has a bore to receive a flow control assembly such that the flow control assembly is coupled to the housing via a non-threaded connection downstream from the filter. A seal is coupled to the housing of the valve cartridge and the seal is positioned between the external threads of the valve cartridge and a sensing chamber of the fluid regulator to prevent impurities from contaminating a process fluid downstream of the filter where the seal and the filter isolate impurities within the opening of the fluid regulator upstream from the filter. The filter possesses a circumferential portion that surrounds a portion of the movable valve assembly and a closed end that retains the movable valve assembly within the bore. The filter forms an interference fit with the housing.

### BRIEF DESCRIPTION OF THE DRAWINGS

FIG. 1 illustrates a known fluid regulator.
FIG. 2 illustrates an enlarged view of a known valve apparatus that may be used to implement the known fluid regulator of FIG. 1
FIG. 3 illustrates an example fluid regulator described herein and not being part of the present invention.
FIG. 4 is an enlarged view of a portion of the example fluid regulator of FIG. 3.
FIG. 5 illustrates a partial view of a fluid regulator having an example valve apparatus of the present invention described herein.
FIG. 6 illustrates a partial view of a fluid regulator having yet another example valve apparatus described herein and not being part of the present invention.

### DETAILED DESCRIPTION

Example valve apparatus described herein significantly reduce or prevent impurities (e.g., contaminate, debris, particulate, etc.) from flowing to downstream components or equipment and/or from accumulating on sealing surfaces of the valve apparatus. More specifically, the example valve apparatus described herein has external threads to removably couple the valve apparatus to a fluid regulator body. When coupled to the fluid regulator body, the valve apparatus defines a low-pressure side of a fluid flow passageway and a high-pressure side of the fluid flow passageway and may include a movable valve member to control the fluid flow between the low-pressure side and the high-pressure side of the passageway. The valve apparatus described herein employs a seal system to prevent impurities from flowing between 11 the high-pressure side of the fluid flow passageway and the low-pressure side of the fluid flow passageway. In other words, the seal system may prevent impurities from flowing in a filtered portion of the fluid flow passageway of the fluid regulator. In some examples, a seal system may include a seal disposed on a low pressure side of the external threads of the valve apparatus. For example, a seal may be disposed between external threads of the valve apparatus and a sensing chamber of the fluid regulator to prevent impurities from flowing in a fluid flow passageway via the sensing chamber. Thus, the example seal prevents fluid communication between the external threads of the valve assembly and the fluid flow passageway.

Additionally, the valve apparatus includes a filter disposed in the fluid flow passageway such that the external threads are disposed between the filter and the seal. In this manner, the example seal and filter prevent impurities from flowing in the fluid flow passageway. In particular, the example filter and the seal isolate or trap impurities (e.g., impurities produced by the external threads) upstream from the filter and prevent such impurities from flowing in the fluid flow passageway and/or accumulating on a valve seat or fluid control apparatus. Thus, the example filter and the seal trap or contain any impurities upstream of the filter.

Further, unlike conventional fluid regulators, the valve apparatus of the illustrated example retains a movable flow control assembly within a bore of the valve apparatus via a non-threaded connection. In other words, the example valve apparatus described herein do not have threaded connections downstream from the filter or a filtered-side of the fluid flow passageway. Thus, the non-threaded connection further reduces the likelihood of contamination of the process fluid downstream from the filter.

In yet other examples not being part of the present invention, an example seal system of a valve apparatus may have a first seal (e.g., an O-ring) disposed adjacent a first side of the external threads of the valve apparatus (i.e., the low-pressure side of the passageway) and a second seal (e.g., an O-ring) disposed adjacent a second side of the external threads (i.e., the high-pressure side of the passageway). In this manner, the example first and second seals capture impurities between the external threads that may be produced during assembly of the fluid regulator.

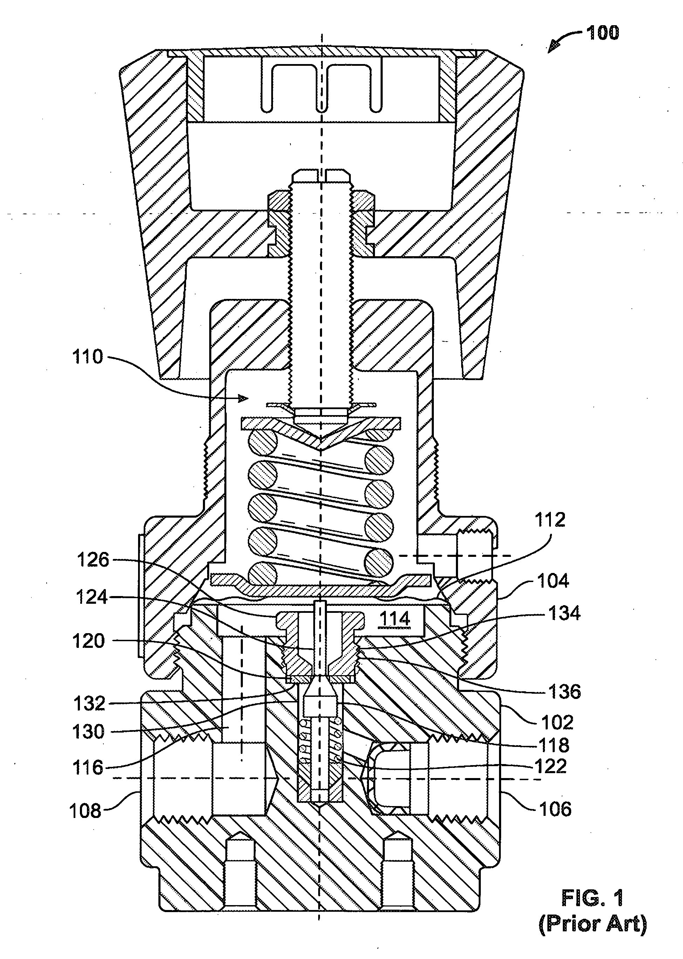

Before discussing an example fluid regulator described herein, a brief description of a known fluid regulator 100 is provided in FIG. 1. Referring to FIG. 1, the example fluid regulator 100 includes a valve body 102 threadably coupled to a bonnet 104 that defines a fluid passageway between an inlet 106 and an outlet 108. A load assembly 110 is disposed within the bonnet 104 to provide a load to a diaphragm 112, where the load corresponds to a desired fluid outlet pressure. The diaphragm 112 is captured between the bonnet 104 and the valve body 102 such that the diaphragm 112 and the valve body 102 define a sensing chamber 114 that is in fluid communication with the outlet 108 via a passageway 116.

A valve apparatus or poppet 118 moves relative to a valve seat 120 to regulate or modulate fluid flow between the inlet 106 and the outlet 108. A biasing element 122 biases the poppet 118 toward the valve seat 120. The poppet 118 also includes a stem 124 to operatively couple the diaphragm 112 and the poppet 118. A retainer 126 retains the valve seat 120 and the poppet 118 within a bore 130 of the valve body 102.

During assembly, the biasing element 122 and the poppet 118 are disposed within the bore 130. The valve seat 120 is disposed within the bore 130 and supported on a shoulder 132 of the bore 130. The retainer 126 is threadably coupled to the bore 130 of the valve body 102. The retainer 126 has a cylindrical body that includes external threads 134 to engage threads 136 of the valve body 102. However, during assembly, the threads 134 of the retainer 126 and/or the threads 136 of the valve body 102, whether plated or un-plated with a coating material, may cause or produce impurities (e.g., contaminate, particulate or debris). For example, during assembly, crowns of the threads 134, 136 may have burrs (e.g., that may be formed during machining of the threads 134, 136) that break-off or produce metal particles or shavings as the threads 134, 136 engage or rotate relative to each other. In some instances, in high pressure applications or pressure cycling applications that produce pressure pulses, a process fluid may cause the impurities or particulate to agitate and flow in the sensing chamber 114, thereby contaminating the process fluid flowing through the fluid flow passageway 116 and contaminating downstream components or equipment.

Additionally or alternatively, the impurities or particulate may flow or accumulate on the valve seat 120 and/or the poppet 118, thereby preventing a tight seal as the poppet 118 engages the valve seat 120 when the fluid regulator 100 is in a closed position. Additionally, accumulation of impurities on the valve seat 120 and/or the poppet 118 may cause damage to the poppet 118 and/or the valve seat 120, thereby reducing the operational life of the poppet 118 and/or the valve seat 120.

The threads 134 of the retainer 126 and the threads 136 of the valve body 102 are typically straight threads so that the retainer 126 can be accurately positioned relative to the valve body 102 and the diaphragm 112. However, because the threads 134, 136 are straight threads, high pressure fluid from the inlet 106 may flow between the threads 134, 136 to the sensing chamber 114, thereby causing impurities to flow in the fluid flow passageway. Further, some known fluid regulators may include a seal disposed below the threads 134, 136 on the inlet side 106 of the fluid flow passageway. However, vibration and/or pressure pulses across the fluid flow passageway may agitate debris or impurities between the threads 134, 136, causing the impurities to flow into the fluid flow passageway via the sensing chamber 114. In some instances, the orientation of the fluid regulator 100 may be such that gravity and/or vibration causes debris or impurities between the threads 134, 136 to flow into the fluid flow passageway. For example, if the fluid regulator 100 is oriented upside down, impurities between the threads 134, 136 may fall into the sensing chamber 114 due to gravity and/or vibration.

Further, although an NPT thread engagement can provide a seal between the engaging threads, an NPT thread instead of the straight threads 134, 136 may not be suitable because an NPT thread may cause the retainer 126 to be at an improper position (e.g., a height, a perpendicularity, etc.) relative to the valve body 102, thereby affecting the position of the poppet 118 relative to the valve seat 132 and, thus, a fluid flow rate for a given stroke position of the diaphragm 112. For example, if the retainer 126 is at a lower height relative to the valve body 308 than desired, the diaphragm 112 may have to be stroked a greater distance than necessary to obtain a desired fluid flow rate.

Further, a cleaning process may not be suitable after assembly of the fluid regulator 100 in some instances because a cleaning solution or solvent may not be completely removed from the fluid regulator 100 after cleaning. As a result, the solvent may interact with a process fluid (e.g., oxygen) in operation when the fluid regulator 100 is coupled to a process system.

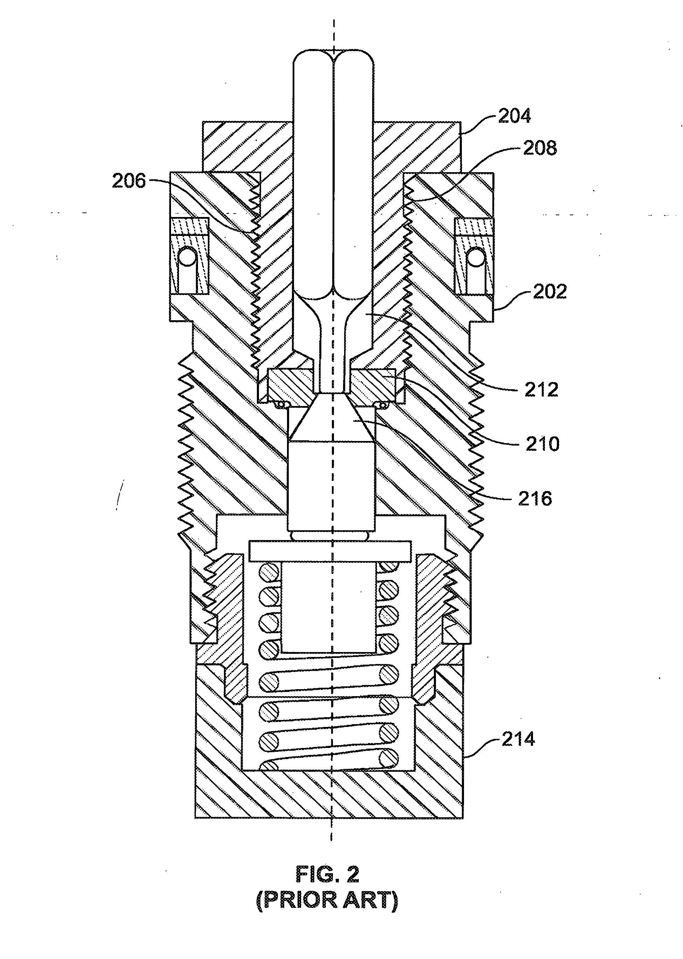

FIG. 2 illustrates a known valve cartridge or apparatus 200 that may be used to implement the fluid regulator 100 of FIG. 1. In this example, the valve apparatus 200 includes a body or housing 202 to threadably couple the valve apparatus 200 to a valve body (e.g., the valve body 102 of the fluid regulator 100 of FIG. 1). Additionally, the valve apparatus 200 includes a cap 204 having external threads 206 that engage internal threads 208 of the body 202 to retain a valve seat 210 within the body 202 of the valve apparatus 200. However, the threads 206 of the body 202 and the threads 208 of the cap 204 are in fluid communication with a fluid flow passageway 212 of the valve apparatus 200. In other words, the threads 206 and 208 are disposed downstream from a filter 214. Thus, debris, contaminate or impurities formed by the threads 206 of the body 202 and the threads 208 (e.g., straight threads) of the cap 204 during assembly may flow within the fluid flow passageway 212 during operation, thereby contaminating downstream components or equipment. Additionally or alternatively, impurities may settle on respective sealing surfaces of the valve seat 210 and/or a poppet 216 of the valve apparatus 200, thereby preventing a substantially tight seal when the poppet 216 engages the valve seat 210 when the valve apparatus 200 is in a closed position. Additionally, such accumulation of impurities may damage the valve seat 210 and/or the poppet 216.

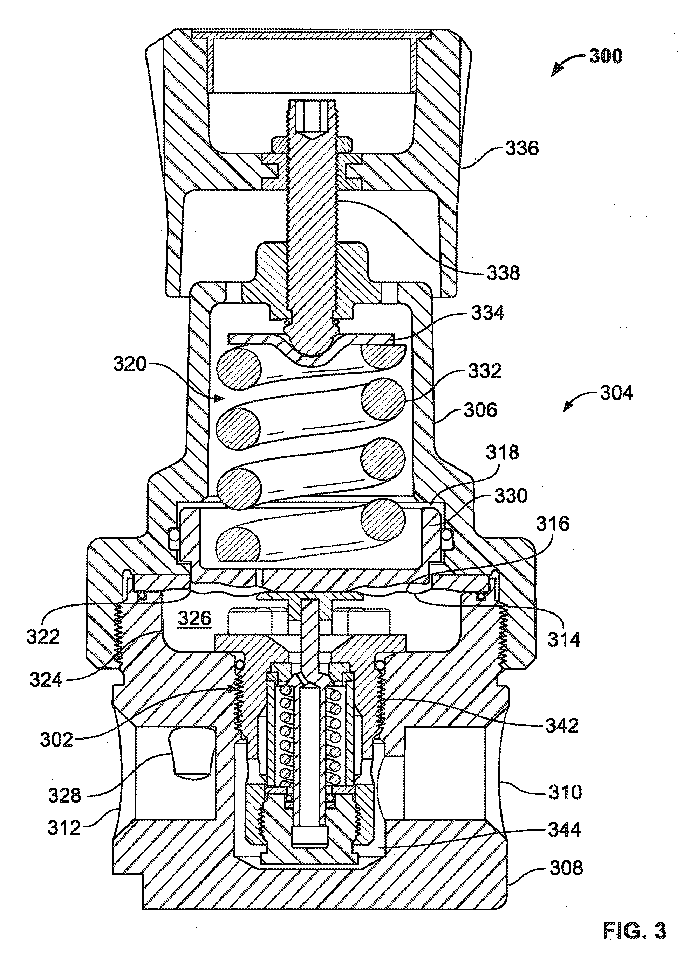

FIG. 3 illustrate an example fluid regulator 300 not being part of the present invention and having a valve cartridge or valve apparatus 302 described herein. Referring to FIG. 3, the example fluid regulator 300 includes a regulator body 304 having an upper body portion or bonnet 306 coupled (e.g., threadably coupled) to a lower body portion or valve body 308. The valve body 308 forms a fluid flow passageway between an inlet 310 and an outlet 312 of the fluid regulator 300. A diaphragm 314 is captured between the valve body 308 and the bonnet 306 so that a first side 316 of the diaphragm 314 and the bonnet 306 define a load chamber 318 to receive a load assembly 320. A second side 322 of the diaphragm 314 and an inner surface 324 of the valve body 308 define a sensing chamber 326. The sensing chamber 326 is fluidly coupled to the outlet 312 via a passage 328 and senses the pressure of the fluid at the outlet 312.

The load assembly 320 is operatively coupled to the diaphragm 314 via a diaphragm plate or back-up plate 330 and provides a reference force or load (e.g., a pre-set force) to the diaphragm 314. In this example, the load assembly 320 includes a biasing element 332 (e.g., a spring) disposed within the load chamber 318 that provides a load to the diaphragm 314 via the diaphragm plate 330. The biasing element 332 seats between the diaphragm plate 330 and a spring button 334 that is operatively coupled to a spring adjustor 336 via a screw 338. The spring adjustor 336 moves the biasing element 332 via the spring button 334 to adjust (e.g., increase or decrease) the amount of a preset force or load that the biasing element 332 exerts on the first side 316 of the diaphragm 314. For example, rotation of the spring adjustor 334 in a first direction (e.g., a clockwise direction) or a second direction (e.g., a counterclockwise direction) varies the amount of compression of the biasing element 332 (e.g., compresses or decompresses the biasing element 332) and, thus, the amount of load exerted on the first side 316 of the diaphragm 314.

To control or modulate fluid flow between the inlet 310 and the outlet 312, the fluid regulator 300 employs the valve apparatus or valve cartridge 302. The valve apparatus 302 of the illustrated example is a subassembly that is disposed within a bore or opening 342 (e.g., a threaded opening) of the valve body 308 that defines an inlet chamber 344 fluidly coupled to the inlet 310. The valve apparatus 302 is operatively coupled to the diaphragm 314 such that the diaphragm 314 causes the valve apparatus 302 to move between an open position to allow fluid flow through the passageway of the fluid regulator 300 and a closed position to restrict fluid flow through the passageway of the fluid regulator 300 based on a pressure differential on opposing of the diaphragm 314 provided by the biasing element 332 and the pressure in the sensing chamber 326.

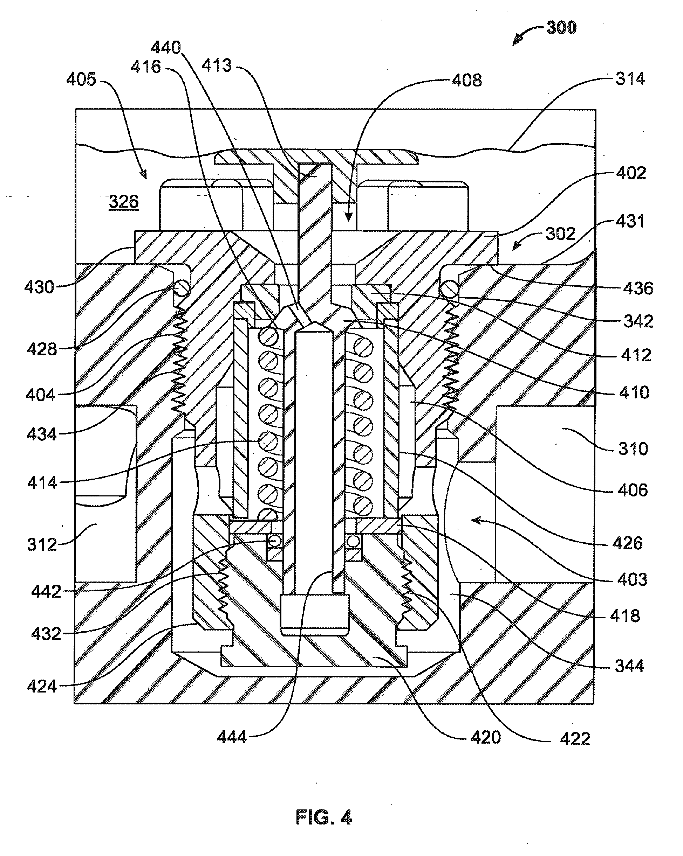

FIG. 4 is an enlarged view of the valve apparatus 302 of FIG. 3. As shown in FIG. 4, the valve apparatus 302 includes a housing or retainer 402. The housing 402 has a cylindrically-shaped body having a threaded portion 404 to threadably couple the valve apparatus 302 to the opening 342 of the valve body 308 of the fluid regulator 300.

The housing 402 includes a cavity or bore 406 to at least partially define the fluid flow passageway when the valve apparatus 302 is coupled to the valve body 308. More specifically, when coupled within the fluid flow passageway of the fluid regulator 300, the valve apparatus 302 defines a high-pressure side 403 of the fluid flow passageway in fluid communication with the inlet 310 and a low-pressure side 405 of the fluid flow passageway in fluid communication with the outlet 312.

A movable valve or flow control assembly 408 is disposed within the bore 406 to control fluid flow between the inlet 310 and the outlet 312. In this example, the flow control assembly 408 includes a poppet 410, a valve seat 412, and a biasing element 414. The biasing element 414 is disposed between a shoulder 416 of the poppet 410 and a spring seat 418 to bias the poppet 410 toward the valve seat 412 (e.g., a closed position). The diaphragm 314 moves relative to (e.g., engages) a stem 413 of the poppet 410 to move the poppet 410 relative to the valve seat 412 to modulate or control fluid flow through the passageway.

To retain the flow control assembly 408 within the bore 406 of the housing 402, the valve apparatus 302 includes a cap 420. The cap 420 includes external threads 422 to threadably couple the cap 420 to an end 424 of the housing 402. In other examples, the cap 420 may be crimped onto the end 424 of the housing 402.

In this example, the valve apparatus 302 also includes a filter or filter cartridge 426 (e.g., a screen) coupled to the housing 402 such that the filter 426 is disposed within the inlet chamber 344. As shown, the filter 426 is disposed between the cap 420 and the valve seat 412 to filter impurities (e.g., debris, contaminates, etc.) in the fluid flowing to the inlet chamber 344 from the inlet 310. Thus, the cap 420 retains the filter 426 within the bore 406 of the housing 402. As shown, the filter 426 is a cylindrically-shaped sintered metal filter that substantially encompasses or surrounds the poppet 410. The filter 426 engages the valve seat 412 to retain the valve seat 412 against a shoulder of the housing 402 to prevent fluid from the inlet chamber 344 from flowing past the valve seat 412.

To provide a seal between the sensing chamber 326 and the inlet chamber 344, the valve apparatus 302 includes a seal 428. The seal 428 (e.g., an O-ring) is disposed between the housing 402 of the valve apparatus 302 and the valve body 308 of the fluid regulator 300. Additionally, the seal 428 is disposed between the sensing chamber 326 and the threads 404 of the housing 402. In particular, the seal 428 is disposed on the low-pressure side 405 of the threads 404 (i.e., above the threads 404 in the orientation of FIGS. 3 and 4) and prevents impurities or debris from flowing between the high-pressure side 403 of the fluid flow passageway to the low-pressure side 405 of the fluid flow passageway via the sensing chamber 326. In other words, the seal 428 is disposed between an outer surface of the housing 402 and an inner surface of the opening 342 of the valve body 308 to prevent impurities adjacent the threads 404 from flowing in the fluid flow passageway via the sensing chamber 326. The opening 342 of the valve body 308 causes the O-ring to collapse or deform when coupled to the opening 342 to provide a relatively fluid tight seal between the valve body 308 and the housing 402.

In the illustrated example, the housing 402 includes a flange 430 to retain the seal 428. Further, the flange 430 provides a positive stop that engages a surface 431 of the valve body 308 to provide a proper position or orientation (e.g., a height, perpendicularity, etc.) of the valve apparatus 302 relative to the valve body 308. Additionally, the threads 404 of the housing 402 and threads 434 of the opening 342 are straight threads so that valve apparatus 302 can be threaded to the opening 342 of the valve body 308 until the flange 430 engages the surface 431 of the valve body 308. Engagement of a surface 436 of the flange 430 with the surface 431 of the valve body 308 provides a proper position (e.g., a height, perpendicularity, etc.) of the valve apparatus 302 relative to the valve body 308. Thus, an NPT thread may not be suitable because such thread may prevent the flange 430 from engaging the surface 431. A proper position or orientation of the valve apparatus 302 provides a predicted flow rate across the orifice of the flow control assembly 408 for a given stroke position of the diaphragm 314. If the valve apparatus 302 is improperly positioned (e.g., at a height greater than or less than the position shown in FIG. 4), the diaphragm 314 may cause the poppet 410 to move at a distance (e.g., a greater distance, a lesser distance) away from the valve seat 412 that provides a different fluid flow rate across the orifice of the flow control assembly 408 than a predicted fluid flow rate at a given stroke length of the diaphragm 314 (e.g., a fluid flow rate greater than or less than the predicted fluid flow rate at the give stroke length).

Additionally or alternatively, if the valve apparatus 302 is adjusted too high, the diaphragm 314 may engage the connector stem 413 and provide a pre-load condition to the poppet 410, which may provide a force on the poppet 410 to prevent the poppet 410 from sealingly engaging the valve seat 412 and causing fluid leakage across the valve seat 412. If the valve apparatus 302 is positioned too low (e.g., at a height that is lower than what is shown), the diaphragm 314 has to move or flex a greater amount or distance to move the poppet 410 away from the valve seat 412 to the open position, which may cause the diaphragm 314 to fail to due to stress or fatigue.

Further, the valve apparatus 302 of the illustrated example employs a non-threaded connection on the low-pressure side 405 of the fluid flow passageway to house or contain the flow control assembly 408 within the bore 406. In other words, the valve apparatus 302 of the illustrated example does not include internal threads on the valve apparatus 302 in fluid communication with the low-pressure side 405 that may introduce impurities or debris downstream of the filter 426 and contaminate the fluid flowing through the passageway, and/or cause damage to the valve seat 412 and/or the poppet 410. More specifically, the flow control assembly 408 is retained within the bore 406 of the housing 402 using a non-threaded connection downstream from the filter 426. For example, the poppet 410, the valve seat 412 and the biasing element 414 are held or retained within the bore 406 between the shoulder of the housing 402 and the cap 420 when the cap 420 is threadably coupled to the housing 402. Further, the threads 422 of the cap 420 and threads 432 of the housing 402 are upstream from the filter 426 or adjacent a non-filtered side of the filter 426 and/or in communication with the high-pressure side 403. Thus, the seal 428 and the filter 426 isolate or prevent impurities formed by the threads 422 and 432 during assembly from flowing into the low-pressure side 403 of the passageway. Further, the seal 428 prevents impurities formed between the threads 404 of the valve apparatus 302 and threads 434 of the opening 342 of the valve body 308 during assembly from flowing into the low-pressure side 403 of the fluid flow passageway.

Referring to FIGS. 3 and 4, in operation, the example fluid regulator 300 fluidly couples to, for example, an upstream pressure source providing a relatively high pressure fluid (e.g., a gas) via the inlet 310 and fluidly couples to, for example, a low pressure downstream device or system via the outlet 312. The fluid regulator 300 regulates the outlet pressure of the fluid flowing through the fluid regulator 300 to a desired pressure corresponding to the preset load provided by the adjustable load assembly 320.

To achieve a desired outlet pressure, the adjustor 336 is rotated (e.g., in a clockwise or counterclockwise direction) to increase or decrease the load exerted by the biasing element 332 on the first side 316 of the diaphragm 314. With the reference pressure set, the sensing chamber 326 senses a pressure of the pressurized fluid at the outlet 312 via the passage 328, which causes the diaphragm 314 to move in response to pressure changes in the sensing chamber 326 based on a pressure or force differential provided across the diaphragm 314 by the pressurized fluid in the sensing chamber 326 and the biasing element 332. A pressure differential across the diaphragm 314 causes the poppet 410 to move between a closed position at which the poppet 410 engages (e.g., sealingly engages) the valve seat 412 to restrict fluid flow between the inlet 310 and the outlet 312 and an open position at which the poppet 410 moves away from the valve set 412 to allow fluid flow between the inlet 310 and the outlet 312. The pressurized fluid flows between the inlet 310 and the outlet 312 until the pressures or forces on opposing sides of the diaphragm 314 are balanced.

Impurities (e.g., debris, contaminate or particulate) in the fluid and/or between the threads 404, 422 that may be produced during assembly of the valve apparatus 302 or the fluid regulator 300 flows toward the filter 426, which prevents or substantially restricts passage of impurities, particulate or contaminate into the fluid flow passageway. Also, the seal 428 prevents impurities within the threads 404 and/or the inlet chamber 344 from flowing in the fluid flow passageway via the sensing chamber 326. As a result, the seal 428 and the filter 426 capture or trap impurities upstream from the filter 426 and away from the fluid flow passageway. As a result, impurities in the fluid and/or that may form during assembly of the fluid regulator 300 settle within the inlet chamber 344 or are contained within the high-pressure side 403 of the fluid flow passageway. Additionally, the valve seat 412 and the poppet 410 are protected from impurities because the seal 428 and the filter 426 both prevent impurities from reaching or accumulating on the valve seat 412 and or the poppet 410.

Further, the valve apparatus 302 provides a non-threaded connection in fluid communication with the low-pressure side 405 of the fluid flow passageway. Thus, the valve assembly 302 does not form impurities downstream from the filter 426 when assembling the valve apparatus 302 to the fluid regulator 300.

The valve apparatus 302 of FIGS. 3 and 4 is a balanced valve apparatus. A balanced valve apparatus may be used with larger Cᵥ (relatively high flow rates) and higher process fluid inlet pressures (e.g., 4500 psi). To balance the poppet 410, the poppet 410 includes a fluid flow passage 440 to fluidly couple a void 444 of the poppet 410 between the seat 412 and the cap 420 to the outlet 312. A seal 442 is disposed between the void 442 and the cap 420 to prevent inlet pressure from flowing into the void 444. During operation, the poppet 410 is substantially balanced with the outlet pressure so that the diaphragm 314 does not have to overcome a force of the inlet pressure when moving the poppet 410. Absent the seal, a force provided by the inlet pressure may cause damage to the poppet 410 and/or the valve seat 412.

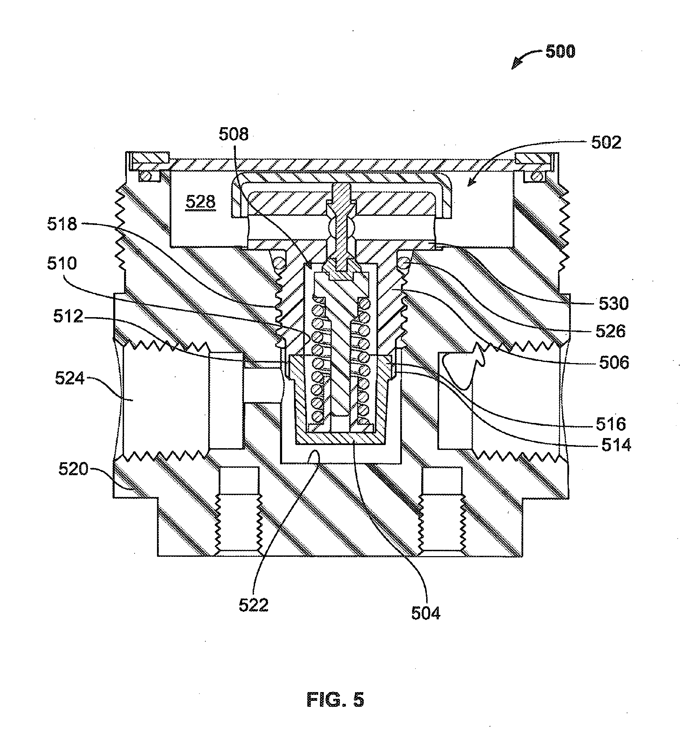

FIG. 5 is a partial view of a fluid regulator 500 having an example valve apparatus or valve cartridge 502 of the present invention described herein. The valve apparatus 502 includes a filter 504 that is coupled to a housing 506 of the valve apparatus 502 to retain a flow control assembly 508 within a bore 510 of the housing 506. Thus, in contrast to the valve apparatus 302 of FIGS. 3 and 4, the filter 504 of the example valve apparatus 502 retains the flow control assembly 508 within the bore 510 of the housing 506 to eliminate a threaded connection between the cap 420 and the housing 402. The filter 504 is coupled to an end 512 of the housing 506 via interference fit. More specifically, the end 512 of the housing 506 includes tabs or fingers 514 to receive an enlarged portion 516 of the filter 504. Unlike the valve apparatus 302 of FIG. 4, the value apparatus 502 of FIG. 5 is not balanced. In particular, the valve apparatus 502 may be used with relatively low Cᵥ (low flow) characteristics and relatively lower process fluid inlet pressures.

Similar to the valve apparatus 302 of FIG. 3, the valve apparatus 502 is a subassembly that includes external threads 518 to threadably couple to a valve body 520 of the fluid regulator 500. In particular, in this example, the housing 506 is a cylindrical body having the external threads 518. The filter 504 is disposed in a bore or inlet chamber 522 in communication with an inlet 524 of the valve body 520 to prevent impurities from flowing within the bore 510 or a fluid flow passageway during operation. A seal 526 is disposed between the threads 518 and a sensing chamber 528 to prevent impurities between the filter 504 and the seal 526 (e.g. in the inlet chamber 522) from flowing in the fluid flow passageway via the sensing chamber 528. The housing 506 of the illustrated example includes a flange 530 to retain the seal between the housing 506 and the valve body 520.

Further, the valve apparatus 502 includes a non-threaded connection downstream from the filter 504. Thus, the filter 504 and the seal 526 trap or contain impurities upstream of the filter 504. In operation, the filter 504 and the seal 526 isolate impurities (e.g., produced by the external threads 518) upstream from the filter 504 and prevent impurities from flowing in the fluid flow passageway and/or accumulating on the fluid control apparatus 508.

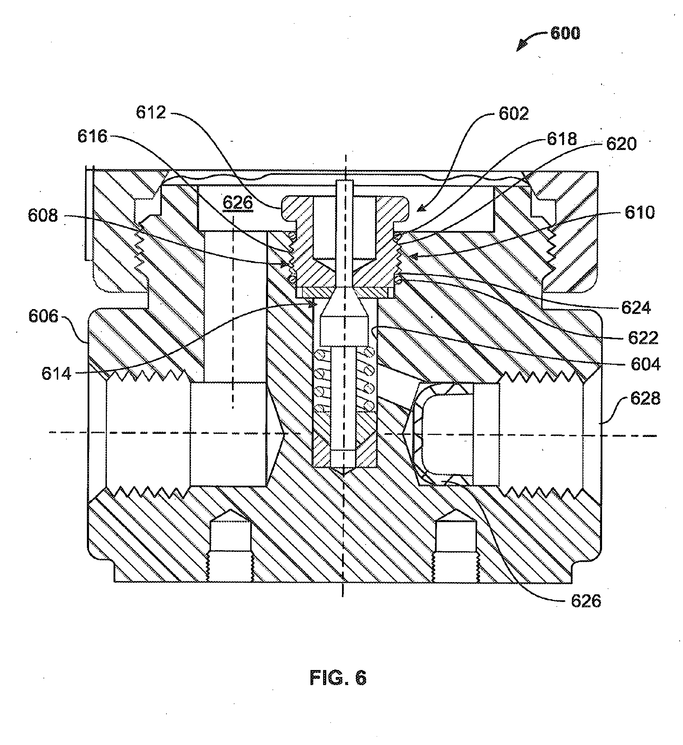

FIG. 6 is a partial view of a fluid regulator 600 having another example valve apparatus 602 described herein and not being part of the present invention. In this example, the valve apparatus 602 is disposed within a bore or inlet chamber 604 of a valve body 606 of the fluid regulator 600. In contrast to the valve apparatus 302 and 502 of FIGS. 3-5, the valve apparatus 602 employs a dual seal apparatus 608 to capture or contain impurities (e.g., contaminate debris or particulate) within threads 610 of the valve apparatus 602.

Referring to FIG. 6, the valve apparatus 602 includes a retaining cap 612 to retain a flow control apparatus 614 in the bore 604 of the valve body 606. The cap 612 has a cylindrical body with external threads 616. A first seal 618 is disposed adjacent a first end 620 of the threads 616, and a second seal 622 is disposed adjacent a second end 624 of the threads 616. In other words, the first seal 618 is disposed between the threads 616 and a low-pressure side or sensing chamber 626 and the second seal 622 is disposed between the threads 616 and a high pressure side or inlet chamber 604 of the valve body 606. In this manner, the first and second seals 618 and 622 capture or contain impurities that may form during assembly when the cap 612 is threadably coupled to the bore 604. In operation, the seals 618 and 622 trap or contain impurities or debris to prevent impurities or debris from flowing in a fluid flow passageway of the fluid regulator 600. Further, a filter 626 may be disposed within an inlet 628 to filter impurities in the fluid upstream from the inlet 628.

Although certain example methods, apparatus and articles of manufacture have been described herein, the scope of coverage of this patent is not limited thereto. On the contrary, this patent covers all methods, apparatus and articles of manufacture fairly falling within the scope of the appended claims.

## Claims

1. A valve assembly (502) for use with a fluid regulator (500) comprising:
a housing (506) to be disposed within a fluid flow passageway of the fluid regulator (500) to define a low-pressure side of the fluid flow passageway and a high-pressure side of the fluid flow passageway, the housing (506) having a bore (510) that at least partially defines the fluid flow passageway when coupled to the fluid regulator (500), the housing (506) having a flow control assembly (508) disposed within the bore (510) via a non-threaded connection in fluid communication with the low-pressure side of the fluid flow passageway and external threads (518) to threadably couple the housing (506) to an opening of the fluid regulator (500); and
a seal system to prevent impurities from flowing between the high-pressure side of the fluid flow passageway and the low-pressure side of the fluid flow passageway;
the valve assembly (502) further comprising a filter (504) to trap impurities within an inlet chamber (522) defined by the opening of the fluid regulator (500), the filter (504) possessing a circumferential portion that surrounds a portion of the movable valve assembly (508) and a closed end that retains the movable valve assembly (508) within the bore (510) of the housing (506), **characterized in that** the filter (502) forms an interference fit with the housing (506).

2. A valve assembly (502) of claim 1, wherein the flow control assembly (508) is to control fluid flow between the low-pressure side and the high-pressure side of the fluid flow passageway, wherein the flow control assembly (508) comprises a valve seat, a poppet and a biasing element disposed within the bore (510) of the housing (506).

3. A valve assembly (502) of any of the preceding claims, wherein the seal system comprises a seal (526).

4. A valve assembly (502) of claim 3, wherein the seal (526) is disposed adjacent an outer portion of the housing (506) between the external threads (518) of the housing (506) and a sensing chamber (528) of the fluid regulator (500) when the valve assembly is coupled to the fluid regulator to prevent impurities from flowing in the fluid flow passageway via the sensing chamber (528).

5. A valve assembly (502) of claim 3 or claim 4, wherein the filter (504) is coupled to the housing (506) and disposed within the high-pressure side of the fluid flow passageway between an inlet (524) of the fluid regulator (500) and the bore (510) such that the seal (526) and the filter (504) trap impurities upstream of the filter (504) to prevent contamination of a process fluid downstream of the filter (504) when the valve assembly is coupled to the fluid regulator (500).

6. A valve assembly (502) of any of claims 2 to 5, wherein the filter (504) substantially surrounds the poppet.

7. A valve assembly (502) of claim 3 or any claim directly or indirectly dependent on claim 3, wherein the seal (526) comprises an O-ring disposed adjacent an end of the external threads (518).

8. A fluid regulator (500), comprising:
a valve body (520) having a threaded opening that at least partially defines a fluid flow passageway between inlet (524) and an outlet;
a valve assembly (502) having a housing (506) that includes external threads (518) to removably couple the valve assembly (502) to the threaded opening of the valve body (520), the valve cartridge (502) having a filter (504) coupled to the housing (506), the housing (506) having a bore (510) to receive a flow control assembly (508), wherein the flow control assembly (508) is coupled to the housing (506) via a non-threaded connection downstream from the filter (504); and
a seal (526) coupled to the housing (506) of the valve assembly (502), the seal (526) being positioned between the external threads (518) of the valve assembly (502) and a sensing chamber (528) of the fluid regulator (500) to prevent impurities from contaminating a process fluid downstream of the filter (504), wherein the seal (526) and the filter (504) isolate impurities within the opening of the fluid regulator (500) upstream from the filter (504);
the filter (504) possesses a circumferential portion that surrounds a portion of the flow control assembly (508) and a closed end that retains the flow control assembly (508) within the bore (510), **characterized in that** the filter (504) forms an interference fit with the housing (506).

9. A fluid regulator (500) of claim 8, wherein the valve assembly (502) includes a cylindrical body portion and a flange portion (530).

10. A fluid regulator (500) of claim 8 or claim 9, wherein the flow control assembly (508) comprises a valve seat, a poppet and a biasing element.

11. A fluid regulator (500) of any of claims 8 to 10, wherein the filter (504) and the seal (526) hold impurities within an inlet chamber (522) in fluid communication with the inlet (524) between the seal (526), the filter (504) and an inner surface of the opening of the valve body (520).

12. A valve assembly (502) for use with a fluid regulator (500), comprising:
a cylindrical body having external threads (518) to removably couple the valve assembly to a fluid regulator (500), and a bore (510) between a first end and a second end of the body to at least partially define a fluid flow passageway of the fluid regulator (500);
a valve seat disposed within the bore (510) such that the valve seat engages a shoulder of the body;
a poppet disposed within the bore (510) and biased toward the valve seat via a biasing element; and
a seal (526) disposed between external threads (518) of the body and a sensing chamber (528) of the fluid regulator (500) to prevent impurities from flowing within the fluid flow passageway via a sensing chamber (528) of the fluid regulator (500);
**characterized in that** the valve assembly (502) further comprises
a filter (504) forming an interference fit with the first end of the body and possessing: (i) a circumferential portion that surrounds a portion of the poppet, and (ii) a closed end to retain the valve seat, the poppet, and the biasing element within the bore (510).

## Patentansprüche

1. Ventilanordnung (502) zur Verwendung mit einem Fluidregler (500), wobei die Ventilanordnung (502) aufweist:
ein Gehäuse (506), welches innerhalb eines Durchganges einer Fluidströmung des Fluidreglers (500) anzuordnen ist, um eine Niederdruckseite des Durchganges der Fluidströmung und eine Hochdruckseite des Durchganges der Fluidströmung zu bestimmen, wobei das Gehäuse (506) eine Bohrung (510) aufweist, welche wenigstens teilweise den Durchgang der Fluidströmung bestimmt, wenn sie mit dem Fluidregler (500) verbunden ist, wobei das Gehäuse (506) eine Flusssteuerungsanordnung (508), welche innerhalb der Bohrung (510) durch einen nicht mit einem Gewinde versehenen Anschluss in einer Fluidverbindung mit der Niederdruckseite des Durchganges der Fluidströmung angeordnet ist, und ein äußeres Gewinde (518) aufweist, um das Gehäuse (506) schraubbar mit einer Öffnung des Fluidreglers (500) zu verbinden, und
ein Dichtungssystem, um zu verhindern, dass Verunreinigungen zwischen der Hochdruckseite des Durchganges der Fluidströmung und der Niederdruckseite des Durchganges der Fluidströmung fließen,
wobei die Ventilanordnung (502) weiterhin aufweist: einen Filter (504), um Verunreinigungen innerhalb einer Einlasskammer (522) einzufangen, welche durch die Öffnung des Fluidreglers (500) bestimmt ist, wobei der Filter (504) einen umlaufenden Bereich aufweist, welcher einen Bereich der beweglichen Ventilanordnung (508) umgibt, und ein geschlossenes Ende aufweist, welches die bewegliche Ventilanordnung (508) innerhalb der Bohrung (510) des Gehäuses (506) zurückhält, **dadurch gekennzeichnet, dass** der Filter (502) eine Presspassung mit dem Gehäuse (506) bildet.

2. Ventilanordnung (502) nach Anspruch 1, wobei die Flusssteuerungsanordnung (508) ausgestaltet ist, um eine Fluidströmung zwischen der Niederdruckseite und der Hochdruckseite des Durchganges der Fluidströmung zu steuern, wobei die Flusssteuerungsanordnung (508) einen Ventilsitz, einen Ventilkegel und ein Vorspannelement aufweist, welches innerhalb der Bohrung (510) des Gehäuses (506) angeordnet ist.

3. Ventilanordnung (502) einem der vorhergehenden Ansprüche, wobei das Dichtungssystem eine Dichtung (526) aufweist.

4. Ventilanordnung (502) nach Anspruch 3, wobei die Dichtung (526) zu einem äußeren Bereich des Gehäuses (506) angrenzend zwischen dem äußerem Gewinde (518) des Gehäuses (506) und einer Messkammer (528) des Fluidreglers (500) angeordnet ist, wenn die Ventilanordnung mit dem Fluidregler verbunden ist, um zu verhindern, dass Verunreinigungen über die Messkammer (528) in den Durchgang der Fluidströmung fließen.

5. Ventilanordnung (502) nach Anspruch 3 oder Anspruch 4, wobei der Filter (504) mit dem Gehäuse (506) verbunden ist und er innerhalb der Hochdruckseite des Durchganges der Fluidströmung zwischen einem Einlass (524) des Fluidreglers (500) und der Bohrung (510) so angeordnet ist, dass die Dichtung (526) und der Filter (504) Verunreinigungen stromaufwärts von dem Filter (504) einfangen, um eine Kontamination einer Prozessflüssigkeit stromabwärts von dem Filter (504) zu verhindern, wenn die Ventilanordnung mit dem Fluidregler (500) verbunden ist.

6. Ventilanordnung (502) einem der Ansprüche 2 bis 5, wobei der Filter (504) den Ventilkegel im Wesentlichen umgibt.

7. Ventilanordnung (502) nach Anspruch 3 oder einem Anspruch, der direkt oder indirekt von Anspruch 3 abhängig ist, wobei die Dichtung (526) einen O-Ring aufweist, der benachbart zu einem Ende des äußeren Gewindes (518) angeordnet ist.

8. Fluidregler (500), welcher aufweist:
einen Ventilkörper (520) mit einer ein Gewinde aufweisenden Öffnung, welche wenigstens teilweise einen Durchgang einer Fluidströmung zwischen einem Einlass (524) und einem Auslass bestimmt,
eine Ventilanordnung (502), welche ein Gehäuse (506) aufweist, welches ein äußeres Gewinde (518) aufweist, um die Ventilanordnung (502) entfernbar mit der ein Gewinde aufweisenden Öffnung des Ventilkörpers (520) zu verbinden, wobei der Ventileinsatz (502) einen Filter (504) aufweist, welcher mit dem Gehäuse (506) verbunden ist, wobei das Gehäuse (506) eine Bohrung (510) aufweist, um eine Flusssteuerungsanordnung (508) aufzunehmen, wobei die Flusssteuerungsanordnung (508) mit dem Gehäuse (506) durch einen ein Gewinde nicht aufweisenden Anschluss stromabwärts von dem Filter (504) verbunden ist, und
eine Dichtung (526), welche mit dem Gehäuse (506) der Ventilanordnung (502) verbunden ist, wobei die Dichtung (526) zwischen dem äußerem Gewinde (518) der Ventilanordnung (502) und einer Messkammer (528) des Fluidreglers (500) angeordnet ist, um zu verhindern, dass Verunreinigungen eine Prozessflüssigkeit stromabwärts von dem Filter (504) kontaminieren, wobei die Dichtung (526) und der Filter (504) Verunreinigungen innerhalb der Öffnung des Fluidreglers (500) stromaufwärts von dem Filter (504) isolieren,
wobei der Filter (504) einen umlaufenden Bereich, welcher einen Bereich der Flusssteuerungsanordnung (508) umgibt, und ein geschlossenes Ende aufweist, welches die Flusssteuerungsanordnung (508) innerhalb der Bohrung (510) des Gehäuses (506) zurückhält, **dadurch gekennzeichnet, dass** der Filter (502) eine Presspassung mit dem Gehäuse (506) bildet.

9. Fluidregler (500) nach Anspruch 8, wobei die Ventilanordnung (502) einen zylindrischen Körperbereich und einen Flanschbereich (530) aufweist.

10. Fluidregler (500) nach Anspruch 8 oder Anspruch 9, wobei die Flusssteuerungsanordnung (508) einen Ventilsitz, einen Ventilkegel und ein Vorspannelement aufweist.

11. Fluidregler (500) nach einem der Ansprüche 8 bis 10, wobei der Filter (504) und die Dichtung (526) Verunreinigungen innerhalb einer Einlasskammer (522) halten, welche in Fluidkommunikation mit dem Einlass (524) zwischen der Dichtung (526), dem Filter (504) und einer inneren Oberfläche der Öffnung der Ventilkörpers (520) ist.

12. Ventilanordnung (502) zur Verwendung mit einem Fluidregler (500), wobei die Ventilanordnung (502) aufweist:
einen zylindrischen Körper, welche ein äußeres Gewinde (518), um die Ventilanordnung entfernbar mit einem Fluidregler (500) zu verbinden, und eine Bohrung (510) zwischen einem ersten Ende und einem zweiten Ende des Körpers aufweist, um wenigstens teilweise einen Durchgang der Fluidströmung des Fluidreglers (500) zu bestimmen,
einen Ventilsitz, welcher innerhalb der Bohrung (510) so angeordnet ist, dass der Ventilsitz im Eingriff mit einer Schulter des Körpers steht,
einen Ventilkegel, welcher innerhalb der Bohrung (510) angeordnet ist und welcher in Richtung auf den Ventilsitz über ein Vorspannelement vorgespannt ist, und
eine Dichtung (526), welche zwischen dem äußeren Gewinde (518) des Körpers und einer Messkammer (528) des Fluidreglers (500) angeordnet ist, um zu verhindern, dass Verunreinigungen innerhalb des Durchganges der Fluidströmung über eine Messkammer (528) des Fluidreglers (500) fließen,
**dadurch gekennzeichnet, dass** die Ventilanordnung (502) weiterhin aufweist:
einen Filter (504), welcher eine Presspassung mit dem ersten Ende des Körpers bildet und welcher aufweist: (i) einen umlaufenden Bereich, welcher einen Bereich des Ventilkegels umgibt, und (ii) ein geschlossenes Ende, welches den Ventilsitz, den Ventilkegel und das Vorspannelement innerhalb der Bohrung (510) zurückhält.

## Revendications

1. Ensemble de vanne (502) à usage avec un régulateur de fluide (500) comprenant :
un boîtier (506) à disposer à l'intérieur d'une voie de passage de flux de fluide du régulateur de fluide (500) pour définir un côté basse pression de la voie de passage de flux de fluide et un côté haute pression de la voie de passage de flux de fluide, le boîtier (506) ayant un perçage (510) qui définit au moins partiellement la voie de passage de flux de fluide lorsqu'il est couplé au régulateur de fluide (500), le boîtier (506) ayant un ensemble de régulation de flux (508) disposé à l'intérieur de l'alésage (510) via une liaison non filetée en communication fluidique avec le côté basse pression de la voie de passage de flux de fluide et des filets externes (518) pour coupler de manière filetée le boîtier (506) à une ouverture du régulateur de fluide (500) ; et
un système de joint pour empêcher des impuretés de s'écouler entre le côté haute pression de la voie de passage de flux de fluide et le côté basse pression de la voie de passage de flux de fluide ;
l'ensemble de vanne (502) comprenant en outre un filtre (504) pour piéger les impuretés à l'intérieur d'une chambre d'entrée (522) définie par l'ouverture du régulateur de fluide (500), le filtre (504) possédant une partie circonférentielle qui entoure une partie de l'ensemble de vanne mobile (508) et une extrémité fermée qui retient l'ensemble de vanne mobile (508) à l'intérieur de l'alésage (510) du boîtier (506), **caractérisé en ce que** le filtre (502) forme un ajustement serré avec le boîtier (506).

2. Ensemble de vanne (502) selon la revendication 1, dans lequel l'ensemble de régulation de flux (508) est destiné à réguler un flux de fluide entre le côté basse pression et le côté haute pression de la voie de passage de flux de fluide, dans lequel l'ensemble de régulation de flux (508) comprend un siège de vanne, un champignon et un élément de rappel disposés à l'intérieur de l'alésage (510) du boîtier (506).

3. Ensemble de vanne (502) selon l'une quelconque des revendications précédentes, dans lequel le système de joint comprend un joint (526).

4. Ensemble de vanne (502) selon la revendication 3, dans lequel le joint (526) est disposé au voisinage d'une partie extérieure du boîtier (506) entre les filets externes (518) du boîtier (506) et une chambre de détection (528) du régulateur de fluide (500) lorsque l'ensemble de vanne est couplé au régulateur de fluide pour empêcher des impuretés de s'écouler dans la voie de passage de flux de fluide via la chambre de détection (528).

5. Ensemble de vanne (502) selon la revendication 3 ou la revendication 4, dans lequel le filtre (504) est couplé au boîtier (506) et disposé à l'intérieur du côté haute pression de la voie de passage de flux de fluide entre une entrée (524) du régulateur de fluide (500) et le perçage (510) de telle sorte que le joint (526) et le filtre (504) piègent les impuretés en amont du filtre (504) pour empêcher une contamination d'un fluide de traitement en aval du filtre (504) lorsque l'ensemble de vanne est couplé au régulateur de fluide (500).

6. Ensemble de vanne (502) selon l'une quelconque des revendications 2 à 5, dans lequel le filtre (504) entoure sensiblement le champignon.

7. Ensemble de vanne (502) selon la revendication 3 ou l'une quelconque des revendications directement ou indirectement dépendantes de la revendication 3, dans lequel le joint (526) comprend un joint torique disposé au voisinage d'une extrémité des filets externes (518).

8. Régulateur de fluide (500), comprenant :
un corps de vanne (520) ayant une ouverture filetée qui définit au moins partiellement une voie de passage de flux de fluide entre une entrée (524) et une sortie ;
un ensemble de vanne (502) ayant un boîtier (506) qui inclut des filets externes (518) pour coupler de manière amovible l'ensemble de vanne (502) à l'ouverture filetée du corps de vanne (520), l'ensemble de vanne (502) ayant un filtre (504) couplé au boîtier (506), le boîtier (506) ayant un perçage (510) pour recevoir un ensemble de régulation de flux (508), dans lequel l'ensemble de régulation de flux (508) est couplé au boîtier (506) via une liaison non filetée en aval du filtre (504) ; et
un joint (526) couplé au boîtier (506) de l'ensemble de vanne (502), le joint (526) étant positionné entre les filets externes (518) de l'ensemble de vanne (502) et une chambre de détection (528) du régulateur de fluide (500) pour empêcher des impuretés de contaminer un fluide de traitement en aval du filtre (504), dans lequel le joint (526) et le filtre (504) isolent les impuretés à l'intérieur de l'ouverture du régulateur de fluide (500) en amont du filtre (504) ;
le filtre (504) possède une partie circonférentielle qui entoure une partie de l'ensemble de régulation de flux (508) et une extrémité fermée qui retient l'ensemble de régulation de flux (508) à l'intérieur du perçage (510), **caractérisé en ce que** le filtre (504) forme un ajustement serré avec le boîtier (506).

9. Régulateur de fluide (500) selon la revendication 8, dans lequel l'ensemble de vanne (502) inclut une partie de corps cylindrique et une partie de bride (530).

10. Régulateur de fluide (500) selon la revendication 8 ou la revendication 9, dans lequel l'ensemble de régulation de flux (508) comprend un siège de vanne, un champignon et un élément de rappel.

11. Régulateur de fluide (500) selon l'une quelconque des revendications 8 à 10, dans lequel le filtre (504) et le joint (526) contiennent des impuretés à l'intérieur de la chambre d'entrée (522) en communication fluidique avec l'entrée (524) entre le joint (526), le filtre (504) et une surface intérieure de l'ouverture du corps de vanne (520).

12. Ensemble de vanne (502) pour une utilisation avec un régulateur de fluide (500), comprenant :
un corps cylindrique ayant des filets externes (518) pour coupler de manière amovible l'ensemble de vanne à un régulateur de fluide (500), et un alésage (510) entre une première extrémité et une seconde extrémité du corps pour définir au moins partiellement une voie de passage de flux de fluide du régulateur de fluide (500) ;
un siège de vanne disposé à l'intérieur de l'alésage (510) de telle sorte que le siège de vanne vienne en contact avec un épaulement du corps ;
un champignon disposé à l'intérieur de l'alésage (510) et rappelé vers le siège de vanne par un élément de rappel ; et
un joint (526) disposé entre les filets externes (518) du corps et une chambre de détection (528) du régulateur de fluide (500) pour empêcher des impuretés de s'écouler à l'intérieur de la voie de passage de flux de fluide via une chambre de détection (528) du régulateur de fluide (500) ;
**caractérisé en ce que** l'ensemble de vanne (502) comprend en outre
un filtre (504) formant un ajustement serré avec la première extrémité du corps et possédant : (i) une partie circonférentielle qui entoure une partie du champignon, et (ii) une extrémité fermée pour retenir le siège de vanne, le champignon et l'élément de rappel à l'intérieur de l'alésage (510).
